# EUROPÄISCHE PATENTSCHRIFT

(11) **EP 2 330 039 B1**
(45) Veröffentlichungstag und Bekanntmachung des Hinweises auf die Patenterteilung: **10.08.2016**
(21) Anmeldenummer: 10015187.7
(22) Anmeldetag: 01.12.2010
(51) Int. Cl.: B64G 1/40, F02K 9/42, F16L 55/053

(54) **Dämpfungselement für ein Treibstoffzufuhr-Leitungssystem eines Raumfahrtantriebssystems**
Attenuation element for a fuel supply line system of a spacecraft propulsion system
Elément d'atténuation pour un système d'alimentation en ergol d'un système de propulsion spatial

(30) Priorität: 07.12.2009 DE 102009056956
(43) Veröffentlichungstag der Anmeldung: 08.06.2011
(73) Patentinhaber: Airbus DS GmbH, 82024 Taufkirchen (DE)
(72) Erfinder: Garus, Adam, 74639 Zweiflingen (DE); Peukert, Markus, 28357 Bremen (DE); Widmann, Reinhold, 74399 Walheim (DE)
(74) Vertreter: Schicker, Silvia

(56) Entgegenhaltungen:
- EP-A1- 1 323 928
- EP-A1- 1 918 626
- DE-A1-102006 025 552
- FR-A1- 2 871 441
- US-A- 3 075 558
- US-A- 5 880 356

## Beschreibung

Die Erfindung betrifft ein Dämpfungselement für ein Treibstoffzufuhr-Leitungssystem eines Raumfahrtantriebssystems. Die Erfindung betrifft ferner ein Raumfahrtantriebssystem, das ein Triebwerk umfasst, das über ein Treibstoffzufuhr-Leitungssystem mit einem Treibstofftank gekoppelt ist.

Typischerweise wird ein Raumfahrzeug auf einer Trägerrakete in den Orbit gebracht. Aus Sicherheitsgründen ist ein Raumfahrtantriebssystem des Raumfahrzeugs während des Starts auf der Trägerrakete inaktiv. Insbesondere sind Maßnahmen getroffen, dass an Bord des Raumfahrzeugs befindlicher Treibstoff lediglich in einem Treibstofftank, nicht jedoch in einem, den Treibstofftank mit einem Triebwerk verbindenden, Treibstoffzufuhr-Leitungssystem vorgesehen ist. Zu diesem Zweck sind - an der Auslaßseite des Treibstofftanks die Leitungen des Treibstoffzufuhr-Leitungssystems mit Absperrorganen versperrt. Die daran anschließende Leitung ist mit einem Gas gefüllt. Zur Inbetriebnahme des Raumfahrtantriebssystems wird das Gas durch sich öffnende Ventile des Treibstoffzufuhr-Leitungssystems entlassen. Dieser Vorgang wird als "Venting" bezeichnet. Nach dem Auslass des Gases herrscht ein Vakuum in den Leitungen. Bei einer nun folgenden Öffnung der Absperrorgane füllen sich die Leitungen des Treibstoffzufuhr-Leitungssystems in sehr kurzer Zeit mit Treibstoff. Das Öffnen der Absperrorgane wird als "Priming" bezeichnet.

Das schnelle Füllen der Leitungen führt zu einem sog. "Priming Schock". Dies ist ein hoher, kurzzeitiger dynamischer Druckanstieg in dem Treibstoffzuführ-Leitungssystem. Je nach Ausgestaltung des Raumfahrtantriebssystems kann dieser Druckstoß Werte erreichen, die das Antriebssystem entweder mechanisch durch die hohe Druckbelastung schädigen oder physikalische Effekte im Treibstoff auslösen, die zu einer Detonation und damit Zerstörung des Raumfahrzeugs führen. Übermäßige Druckspitzen sind deshalb in jedem Falle zu vermeiden.

Hierzu ist es bekannt, den Primingprozess, d.h. das Füllen der Leitungen des Treibstoffzufuhr-Leitungssystems mit Treibstoff, zu verlangsamen. Hierzu ist ein weiteres Ventil notwendig, das einen mit einer Blende versehenen und parallel zur Haupttreibstoffleitung angeordneten Leitungsast freischaltet. Nachteilig hieran ist, dass für den verlangsamten Füllvorgang der Leitungen eine gewisse Zeit benötigt wird, die jedoch nicht bei allen Arten von Raumfahrtantriebssystemen zur Verfügung steht. Beispielsweise ist die für einen verlangsamten Primingprozess notwendige Zeit bei Landesystemen für Sonden nicht akzeptabel. Ein weiterer Nachteil besteht darin, dass ein zusätzliches, aktiv zu betätigendes Ventil notwendig ist, welches einerseits Kosten und andererseits Gewicht verursacht. EP 1 918 626 offenbart einen Speicher zur Dämpfung von Druckpulsationen.

Es ist deshalb Aufgabe der vorliegenden Erfindung, ein System zur passiven Dämpfung eines durch das schnelle Füllen eines Treibstoffzufuhr-Leitungssystems verursachten Treibstoffstoßes anzugeben.

Diese Aufgabe wird gelöst durch ein Dämpfungselement gemäß den Merkmalen des Patentanspruchs 1 sowie ein Raumfahrtantriebssystem gemäß den Merkmalen des Patentanspruchs 12. Vorteilhafte Ausgestaltungen ergeben sich jeweils aus den abhängigen Patentansprüchen.

Es wird ein Dämpfungselement für ein Treibstoffzufuhr-Leitungssystem eines Raumfahrtantriebssystems vorgeschlagen. Dieses umfasst ein Gehäuse mit einem Aufnahmeraum, der mit einer Leitung des Treibstoffzufuhr-Leitungssystems gekoppelt ist, welcher einen Treibstofftank mit einem Triebwerk verbindet. Das Dämpfungselement umfasst ferner einen in dem Aufnahmeraum angeordneten elastischen Körper, der beim Öffnen eines Tankabsperrorgans des Treibstoffzufuhr-Leitungssystems durch den durch das Einströmen von Treibstoff in das Treibstoffzufuhr-Leitungssystem entstehenden Stoß definiert verformbar ist, wodurch der Stoß gedämpft wird.

Durch das erfindungsgemäße Dämpfungselement kann der in dem Treibstoffzufuhr-Leitungssystem durch das schlagartige Füllen mit Treibstoff entstehende Stoß in seiner Wirkung auf ein solches Maß reduziert werden, dass die Druckbelastung weder das Triebwerk schädigt noch physikalische Effekte im Treibstoff auslösbar sind, welche zu einer Detonation führen können. Aufgrund seines einfachen Aufbaus ist dieses in seiner Funktion verlässlich. Es kann darüber hinaus mit geringem Gewicht und kostengünstig hergestellt werden. Der einfache konstruktive Aufbau des Dämpfungselements sorgt darüber hinaus dafür, dass kein Schmutz produziert wird, z.B. durch den Abrieb sich bewegender Teile.

Optional ist eine Feder im Inneren des elastischen Körpers angeordnet, mit welcher das nachgebende Volumen und die Federsteifigkeit des Dämpfungselements einstellbar sind. Durch die Unterstützung der zusätzlichen Feder lassen sich das nachgebende Volumen und die Federsteifigkeit des Systems elastischer Körper-Feder beliebig einstellen. Dabei besteht keine Verknüpfung zwischen der Geometrie des elastischen Körpers und seiner Federsteifigkeit.

Es ist weiterhin zweckmäßig, wenn der Aufnahmeraum an einer ersten Stirnseite an die Leitung mit einer vorgegebenen Querschnittsfläche mündet, wobei die Querschnittsfläche eine Kontaktfläche des elastischen Körpers ausbildet, mit welcher der elastische Körper mit dem Treibstoff nach dem Öffnen des Tankabsperrorgans in mechanischen Kontakt gelangt. Insbesondere ist die Querschnittsfläche derart bemessen, dass, optional in Verbindung mit der Feder, die auf die Querschnittsfläche wirkende Kraft im Verhältnis zu dem Volumen im Inneren des elastischen Körpers und/oder der Steifigkeit des elastischen Körpers derart bemessen ist, dass der Treibstoffstoß gedämpft wird. Die Größe der Kontaktleitung kann dabei durch eine Querschnittsöffnung oder den Querschnitt einer Zuleitung zu dem Treibstoffzufuhr-Leitungssystem festgelegt werden. Durch die Querschnittsfläche, das Material des elastischen Körpers, dessen mechanische Eigenschaften sowie die geometrische Gestalt werden dann die Dämpfungseigenschaften des Dämpfungselements festgelegt. Diese können somit bei der Konstruktion des Dämpfungselements sowie dessen Integration in das Raumfahrtantriebssystem definiert eingestellt werden.

Der elastische Körper weist eine oder mehrere Aussparungen auf, durch die während der Verformung des elastischen Körpers Treibstoff in das Innere des elastischen Körpers gelangt, wobei der Aufnahmeraum des Dämpfungselements nach dem Ende des Stoßes vollständig mit Treibstoff gefüllt ist. Hierdurch kann sichergestellt werden, dass bei später gefüllten Leitungen des Treibstoffzufuhr-Leitungssystems und dem Betrieb des Raumfahrtantriebssystems das Dämpfungselement nicht zu Schwingungen in dem Treibstoffzufuhr-Leitungssystem beiträgt. Das Dämpfungselement kann sich hierdurch starr verhalten. Hierdurch ist das Dämpfungselement während der anschließenden Betriebsphase des Raumfahrtantriebssystems inaktiv. Durch das Triebwerk angeregte Schwingungen werden im Treibstoffzufuhr-Leitungssystem damit nicht verstärkt.

Zweckmäßigerweise sind die Aussparung oder Aussparungen im Bereich der Querschnittsfläche angeordnet. Besonders bevorzugt ist es, wenn die Aussparung oder Aussparungen im Bereich einer Lochfläche der Querschnittsfläche angeordnet sind, wobei die Lochfläche (wesentlich) kleiner als die Querschnittsfläche des elastischen Körpers ist. Durch die im Vergleich zur Querschnittsfläche kleine Lochfläche verbleibt eine große Kontaktfläche des elastischen Körpers mit dem Treibstoff. Hierdurch kann die Verformungsgeschwindigkeit des elastischen Körpers gering gehalten werden. Hierdurch ergibt sich auch eine kleinere Geschwindigkeit des Treibstoff-Zulaufs ins Innere des elastischen Körpers.

Bei der Dimensionierung und Anordnung der Aussparung oder Aussparungen ist sicherzustellen, dass die Querschnittsgröße der Aussparung oder Aussparungen zum Füllen des Inneren des elastischen Körpers unabhängig von den Dämpfungseigenschaften sind. Auf diese Weise lässt sich die Dauer des Füllvorgangs unabhängig von der Zeitdauer des Stoßes und damit der Dämpfung einstellen.

Es ist weiterhin zweckmäßig, wenn der elastische Körper die Gestalt eines Balgs, insbesondere eines Faltenbalgs, aufweist. Bei einer Ausgestaltung des elastischen Körpers als Faltenbalg erfolgt eine Belastung nur durch den, von außerhalb des Faltenbalgs erzeugten Druck. Das Faltenbalg-Design ermöglicht darüber hinaus die Verformung zum Dämpfen des Stoßes unabhängig von der Lochfläche bzw. der Anzahl und/oder Größe der Aussparungen. Bevorzugt kommt ein dichtes Federsystem, unabhängig von der Lochfläche zum Einsatz, wie dies bei einem Faltenbalg der Fall ist. Ein weiterer Vorteil der Ausgestaltung als Balg besteht darin, dass bei dessen Verformung Spannungen maximal im elastischen Bereich auftreten. Eine plastische Verformung kann hingegen vermieden werden, wodurch eine erhöhte Zuverlässigkeit bereitgestellt ist.

Gemäß einer weiteren Ausgestaltung ist der elastische Körper aus einem Metall, insbesondere Titan, gebildet.

In einer konkreten Ausgestaltung weist das Gehäuse die Gestalt eines Zylinders mit einer Höhe H auf, wobei in dem Zylinder an einer zweiten Stirnseite ein topfförmiger Vorsprung der Tiefe T ragt, der den elastischen Körper umschließt. Durch die Größe und Abmaße des topfförmigen Vorsprungs kann das Volumen im Inneren des Gehäuses festgelegt werden. Darüber hinaus kann der Vorsprung zur vereinfachten Befestigung und Führung des elastischen Körpers bzw. der Feder dienen. Zweckmäßigerweise ist das Verhältnis von H/T ungefähr 2.

In einer weiteren konkreten Ausgestaltung weist der elastische Körper einen äußeren Durchmesser d_a und einen inneren Durchmesser d_i auf, wobei gilt: d_a/d_i ≈ 1,5. Dieses Verhältnis ist durch die konkrete Form des Faltenbalgs bestimmt. Für die Funktion der Erfindung kann auch ein davon abweichendes Verhältnis gewählt werden.

Das Dämpfungselement ist gemäß einer weiteren konkreten Ausgestaltung derart ausgestaltet, dass der Treibstoffstoß durch dieses auf einen Maximaldruck von 70 bar, bevorzugt von 50 bar, reduzierbar ist. Ein solches Dämpfungselement eignet sich insbesondere zur Verwendung in einem Hydrazin-Triebwerk.

Die Erfindung schlägt ferner ein Raumfahrtantriebssystem vor, das ein Triebwerk umfasst, das über ein Treibstoffzufuhr-Leitungssystem mit einem Treibstofftank gekoppelt ist. In dem Treibstoffzufuhr-Leitungssystem ist ein Dämpfungselement der vorstehend beschriebenen Art vorgesehen. Das Raumfahrtantriebssystem weist dabei die gleichen Vorteile auf, wie diese vorstehend in Verbindung mit dem Dämpfungselement beschrieben wurden. Das Triebwerk kann beispielsweise als Hydrazinantrieb ausgebildet sein.

Zweckmäßigerweise umfasst das Treibstoffzufuhr-Leitungssystem ein Triebwerksventil, das nahe dem Triebwerk angeordnet ist, wobei das Dämpfungselement als abschließendes Element des Treibstoffzufuhr-Leitungssystems unmittelbar vor dem Triebwerksventil angeordnet ist. Hierdurch kann der Treibstoffstoß unmittelbar an seinem Entstehungsort, d.h. dem Leitungsende (vom Treibstofftank her gesehen) gedämpft werden. Um die Beschädigung des Triebwerksventils zu vermeiden, ist das Dämpfungselement vor dem Triebwerksventil angeordnet.

Die Erfindung wird nachfolgend näher anhand eines Ausführungsbeispiels erläutert. Es zeigen:
- Fig. 1: eine schematische Darstellung eines erfindungsgemäßen Dämpfungselements für ein Treibstoffzufuhr-Leitungssystem eines Raumfahrtantriebssystems,
- Fig. 2: den zeitlichen Verlauf eines Druckstoßes in einem Treibstoffzufuhr-Leitungssystem ohne ein erfindungsgemäßes Dämpfungselement,
- Fig. 3: den zeitlichen Verlauf eines Druckstoßes in einem Treibstoffzufuhr-Leitungssystem bei Verwendung eines erfindungsgemäßen Dämpfungselements,
- Fig. 4: den zeitlichen Verlauf der Auslenkung eines elastischen Körpers des Dämpfungselements bei einem Treibstoffstoß, und
- Fig. 5: den zeitlichen Verlauf der Bewegungsgeschwindigkeit des elastischen Körpers des Dämpfungselements.

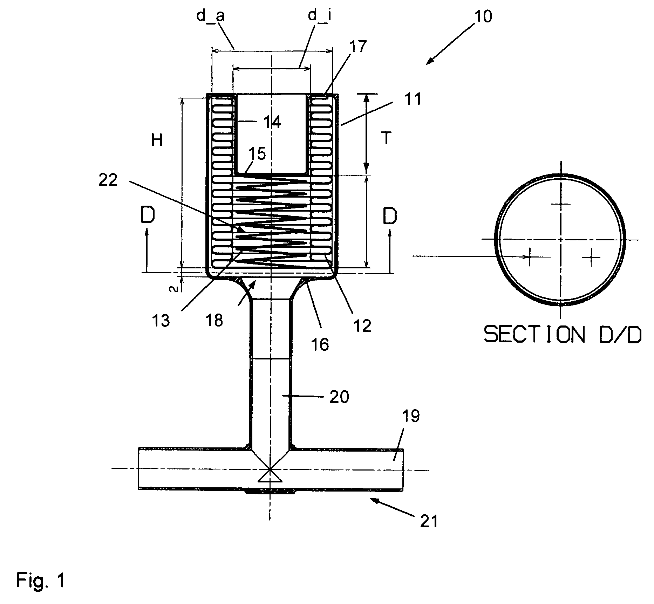

Fig. 1 zeigt in schematischer Darstellung ein erfindungsgemäßes Dämpfungselement 10 für ein Treibstoffzufuhr-Leitungssystem 21 eines Raumfahrtantriebssystems. Das nicht näher dargestellte Raumfahrtantriebssystem umfasst ein Triebwerk, das über das Treibstoffzufuhr-Leitungssystem 21 mit einem Treibstofftank gekoppelt ist. Der Treibstofftank ist durch ein Tankabsperrorgan absperrbar, welches Teil des Treibstoffzufuhr-Leitungssystems ist. Das Treibstoffzufuhr-Leitungssystem 21 umfasst ferner ein nicht näher dargestelltes Triebwerksventil, das nahe dem Triebwerk angeordnet ist. Das Dämpfungselement 10 ist vorzugsweise als abschließendes Element des Treibstoffzufuhr-Leitungssystems 21 unmittelbar vor dem Triebwerksventil angeordnet. Da der prinzipielle Aufbau eines derartigen Raumfahrtantriebssystems dem Fachmann hinlänglich bekannt ist, wird auf eine eingehendere Beschreibung an dieser Stelle verzichtet.

Das erfindungsgemäße Dämpfungselement 10 umfasst ein zylinderförmiges Gehäuse 12, dessen Aufnahmeraum 22, der über eine Zuleitung 20 mit einer Leitung 19 des Treibstoffzufuhr-Leitungssystems 21 gekoppelt ist. In dem Aufnahmeraum 22 ist ein als Faltenbalg ausgebildeter elastischer Körper 12 angeordnet. Dieser verformt sich beim Öffnen eines in der Figur nicht näher dargestellten Tankabsperrorgans des Treibstoffzufuhr-Leitungssystems 21 durch den durch das Einströmen von Treibstoff in die Leitungen 19, 20 entstehenden Stoß (sog. Priming bzw. Treibstoff- oder Druckstoß) in definierter Weise. Durch die federnden Eigenschaften des Faltenbalgs wird der Stoß gedämpft.

Während bei einem Raumfahrtantriebssystem der durch das eingangs beschriebene Priming entstehende Stoß ca. 250 bar beträgt, kann unter Einsatz eines erfindungsgemäßen Dämpfungselements der Druckstoß auf ca. 50 bar reduziert werden. Hierdurch ist sichergestellt, dass weder Teile des Treibstoffzufuhr-Leitungssystems Schaden erleiden oder physikalische Effekte in dem Treibstoff ausgelöst werden, welche zu einer Detonation führen. Demgegenüber ist eine Druckbelastung von 250 bar oberhalb eines Limits eines Hydrazinantriebs.

Das zylinderförmige Gehäuse 11 ist mit seiner ersten Stirnseite 16 mit der Zuleitung 20 gekoppelt. Der Durchmesser des Gehäuses 11, der in etwa einem Außendurchmesser d_a des Faltenbalgs entspricht, ist dabei größer als der Durchmesser der Zuleitung 20, wodurch der an die erste Stirnseite 16 ragende Faltenbalg 12 dem durch die Zuleitung 20 einströmenden Treibstoff lediglich im Bereich einer Querschnittsfläche 18 ausgesetzt ist. An seiner zweiten Stirnseite 17 des Gehäuses weist das Gehäuse 11 einen topfförmigen Vorsprung 14 auf, der in das Innere des Gehäuses ragt und dessen Volumen verkleinert. Eine Grundfläche 15 des Vorsprungs dient einer optional im Inneren des Faltenbalgs 12 vorgesehenen Feder 13 als Widerlager. Das andere Ende der Feder 13 stützt sich im Bereich der Querschnittsfläche 18 an dem Faltenbalg 12 selbst ab. Durch den topfförmigen Vorsprung 14, der ins Innere des Gehäuses 11 ragt, ergibt sich eine Führung für den Faltenbalg 12. Insbesondere wird bei dessen elastischer Verformung sichergestellt, dass sich dieser nicht ins Innere des Gehäuses hinein verformt. Der topfförmige Vorsprung 14 weist einen Durchmesser auf, der in etwa einem inneren Durchmesser d_i des Faltenbalgs 12 entspricht. Der topfförmige Vorsprung 14 ragt mit einer Tiefe T in das Innere des Gehäuses 11 hinein. Das Gehäuse 11 weist eine Höhe H auf, wobei das Verhältnis von H/T ungefähr 2 beträgt.

Die Querschnittsfläche 18 ist derart bemessen, dass die auf sie wirkende Kraft (verursacht durch den Druck des Treibstoffs) im Verhältnis zu dem Volumen im Inneren des Faltenbalgs 12 und/oder der Steifigkeit des Faltenbalgs 12, optional in Verbindung mit der im Inneren des Faltenbalgs 12 vorgesehenen Feder 13, derart bemessen ist, dass der Treibstoffstoß gedämpft wird. Im Bereich der Querschnittsfläche 18 sind Aussparungen in den Faltenbalg eingebracht, durch die Treibstoff ins Innere des Faltenbalgs strömen kann.

Der Faltenbalg wird zweckmäßigerweise als Metallbalg aus Titan hergestellt um Kompatibilität mit raumfahrtüblichen Treibstoffen zu gewährleisten. Prinzipiell können auch andere Werkstoffe zum Einsatz kommen. Dessen äußerer Durchmesser d_a beträgt z.B. ca. 28 mm. Der innere Durchmesser d_i beträgt ca. 18 mm. Die Lagenzahl beträgt z.B. 3, die Wellenzahl z.B. 12. Die Höhe des Faltenbalgs 12, die in etwa der Höhe H des Gehäuses 11 entspricht, beträgt ca. 38 mm. Hieraus ergibt sich eine effektive Querschnittfläche 18 von 4 cm², und, bei einem Druck von 50 bar, ein Federweg von 10 mm.

In Fig. 1 ist ferner ein Querschnitt längs der Linie D-D dargestellt, welche die zylinderförmige Gestalt des Gehäuses 11 illustriert.

Bei Inbetriebnahme des Raumfahrtantriebssystems wird zunächst der eingangs beschriebene Venting-Prozess durchgeführt. Dabei wird neben dem gesamten Treibstoffzufuhr-Leitungssystem auch der Aufnahmeraum 22 des Dämpfungselements 10 evakuiert. Bei der Initialisierung des Primings kommt es zu einem Druckanstieg am Leitungsende der Leitung 19, an dem das Dämpfungselement 10 angeordnet ist. Der elastische Faltenbalg 12 dämpft den dabei entstehenden Druckstoß ab. Durch die Elastizität des Dämpfungselements wird der Stoß zeitlich in die Länge gezogen, wodurch die Amplitude des Stoßes reduziert wird.

Während des Dämpfungsvorgangs fließt durch die im Bereich der Querschnittsfläche 18 vorgesehenen Aussparungen Treibstoff in das Innere des Faltenbalgs 10 bzw. des Aufnahmeraums 22 des Gehäuses 11. Die in der Figur nicht dargestellten Aussparungen sind derart dimensioniert, dass der Auffüllvorgang des Inneren des Faltenbalgs deutlich länger als der durch den Treibstoff verursachte Stoß andauert. Hierdurch wird die Elastizität des Dämpfungselements während des Primings nicht eingeschränkt. Nach Beendigung der durch den Treibstoff verursachten Schwingungen im Treibstoffzufuhr-Leitungssystem 21 ist der Aufnahmeraum 22 des Dämpfungselements 10 voll gefüllt. Durch den im Inneren des Faltenbalgs 10 "eingesperrten" Treibstoff, der nur sehr langsam durch die Aussparungen entweichen kann, ist das Dämpfungselement nahezu inaktiv, da der Treibstoff nur sehr gering komprimierbar ist.

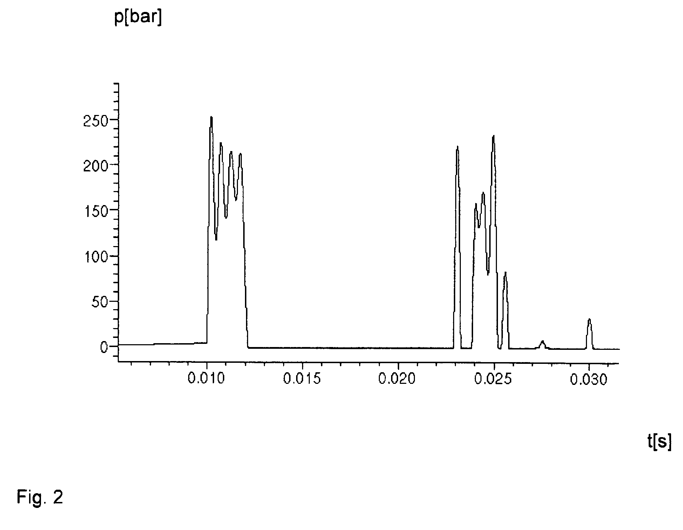

Fig. 2 zeigt den zeitlichen Verlauf eines Druckstoßes ohne das Vorhandensein des in Fig. 1 beschriebenen Dämpfungselements. Dabei ist der Druck über die Zeit aufgetragen. Wie ohne Weiteres zu erkennen ist, tritt nach 10 ms ein Treibstoffstoß mit über 250 bar auf, welcher für ca. 2 ms ausschwingt, bis eine Druckreduktion auf nahezu 0 erfolgt. Ein weiterer Druckstoß ist nach ca. 23 ms erkennbar.

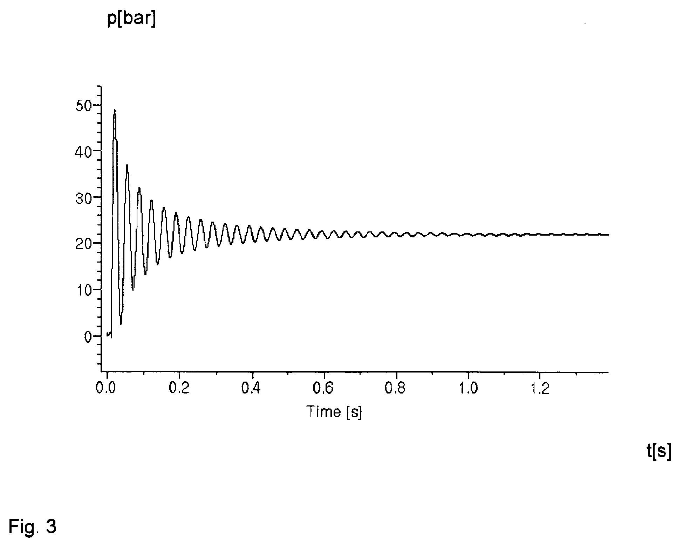

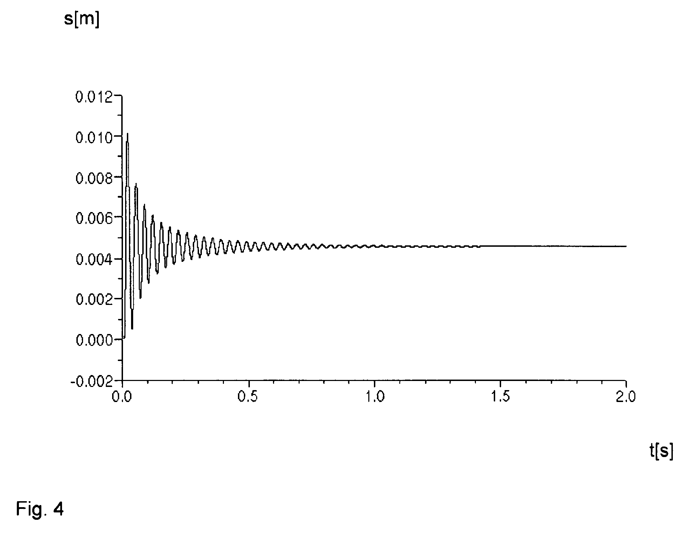

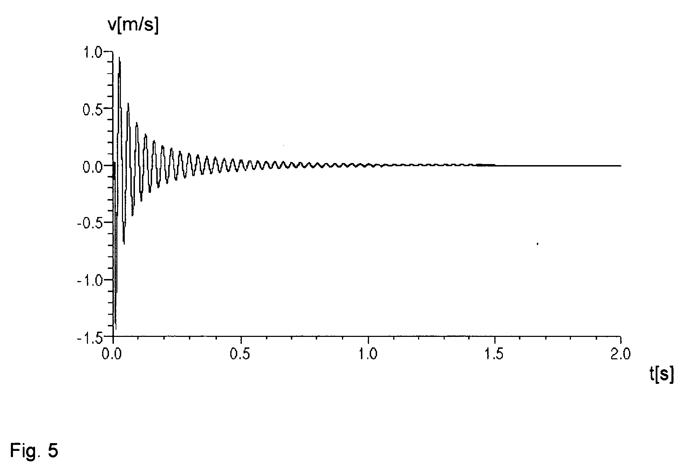

Demgegenüber zeigt Fig. 3 den zeitlichen Verlauf des Drucks bei Einsatz eines erfindungsgemäßen Dämpfungselements. Die Figuren 4 und 5 illustrieren in schematischer Weise zusätzlich die Auslenkung des Dämpfungselements bzw. die Bewegungsgeschwindigkeit des Dämpfers. Obwohl die Figuren 3 bis 5 nicht maßstabsgetreu zueinander dargestellt sind, ist ohne Weiteres erkennbar, dass ein dem Druckverlauf entsprechender Verlauf der Auslenkung sowie der Bewegungsgeschwindigkeit des Dämpfungselements vorliegt. Durch den Einsatz des Dämpfungselements kann der Druckstoß bei ansonsten gleicher Konfiguration des Raumfahrtantriebssystems auf weniger als 50 bar begrenzt werden. Die Dämpfungsfunktion ist aufgrund des exponentiell abklingenden Druckverlaufs ohne Weiteres erkennbar.

Das erfindungsgemäße Dämpfungselement weist den Vorteil auf, dass die nachfolgend beschriebenen Parameter unabhängig voneinander gewählt werden können. Hierdurch lässt sich eine Anpassung des Dämpfungselements auf beliebige Einsatzsituationen bzw. Raumfahrtantriebssysteme realisieren.

Als Auslegungsparameter werden berücksichtigt:
- Die Form des elastischen Körpers 12, der in Fig. 1 lediglich beispielhaft als Faltenbalg ausgebildet ist, darf bei seiner Verformung Spannungen maximal im elastischen Bereich aufweisen. Eine plastische Verformung muss vermieden werden.
- Durch die Unterstützung einer zusätzlichen Feder lassen sich das nachgebende Volumen und die Federsteifigkeit des Systems elastischer Körper und Feder beliebig einstellen. Es besteht keine Verknüpfung zwischen der Geometrie des elastischen Körpers und seiner Federsteifigkeit.
- Die Steifigkeit der Feder wird zusammen mit der Querschnittsfläche 18 derart gewählt, dass das nachgebende Volumen ausreichend groß ist, um den Stoß zu dämpfen.
- Die Verformung des elastischen Körpers durch das Abfedern des Stoßes muss unabhängig von einer im Bereich der Querschnittsfläche vorgesehenen Lochfläche sein. Die Lochfläche ist dabei diejenige Fläche, in deren Bereich die Mehrzahl an Aussparungen im Bereich der Querschnittsfläche angeordnet ist. Bevorzugt kommt ein dichtes Federsystem, unabhängig von der Lochfläche, zum Einsatz, was durch das in Fig. 1 gezeigte Faltenbalg-Design sichergestellt ist.
- Unabhängige Querschnittsgrößen der Löcher zum Füllen des Aufnahmeraums bzw. Inneren des elastischen Körpers 12. Hierdurch lässt sich die Dauer des Füllvorgangs unabhängig von der Stoßdauer einstellen.
- Damit die Verformungsgeschwindigkeit des elastischen Körpers gering bleibt, muss eine große Querschnittsfläche (d.h. Kontaktfläche mit dem Treibstoff) vorgesehen sein, während die Lochfläche klein ist. Damit lassen sich auch geringe Geschwindigkeiten des Treibstoffs im Zulauf realisieren.
- Bei dem in Fig. 1 dargestellten Faltenbalg-Design erfolgt eine Belastung lediglich durch einen Außendruck.

An dieser Stelle wird angemerkt, dass sich eine Anwendung als Akkumulator oder "hydraulischer Dämpfer" zum Dämpfen von dynamischen Schwingungen während des Betriebs (sog. Wasserhammerstöße) mit dem vorgeschlagenen Dämpfungselement nicht realisieren lassen. Durch das beschriebene Design wird gerade bezweckt, dass sich das Dämpfungselement nach dem Priming starr verhält, während Wasserhammerstöße durch das Treibstoffzufuhr-Leitungssystem gehen, wie diese beispielsweise beim Pulsbetrieb von Triebwerken auftreten. Bei dem erfindungsgemäßen Dämpfungselement werden deshalb nach der Inbetriebnahme die Federeigenschaften verändert. Realisiert wird dies über die Mehrzahl an Aussparungen im Bereich der ersten Stirnfläche des elastischen Körpers, wodurch das durch den elastischen Körper eingeschlossene Volumen langsam mit Treibstoff gefüllt und so die Federeigenschaft blockiert wird.

### Bezugszeichenliste

- 10: Dämpfungselement
- 11: Gehäuse
- 12: elastischer Körper
- 13: Feder
- 14: topfförmiger Vorsprung
- 15: Grundfläche des Vorsprungs
- 16: erste Stirnseite des Gehäuses
- 17: zweite Stirnseite des Gehäuses
- 18: Querschnittsfläche
- 19: Leitung
- 20: Zuleitung
- 21: Treibstoffzufuhr-Leitungssystem
- 22: Aufnahmeraum
- H: Höhe
- T: Tiefe
- d_a: Außendurchmesser
- d_i: Innendurchmesser

## Patentansprüche

1. Dämpfungselement (10) für ein Treibstoffzufuhr-Leitungssystem (21) eines Raumfahrtantriebssystems, umfassend:
- ein Gehäuse (11) mit einem Aufnahmeraum (22), der mit einer Leitung (19) des Treibstoffzufuhr-Leitungssystems (21) koppelbar ist, welche mit einem Treibstofftank und mit einem Triebwerk verbindbar ist; und
- einen in dem Aufnahmeraum (22) angeordneten elastischen Körper (12), der beim Öffnen eines Tankabsperrorgans des Treibstoffzufuhr-Leitungssystems (21) durch den durch das Einströmen von Treibstoff in das Treibstoffzufuhr-Leitungssystem (21) entstehenden Stoß definiert verformbar ist, wodurch der Stoß gedämpft wird;
**dadurch gekennzeichnet, dass**
- der elastische Körper (12) eine oder mehrere Aussparungen aufweist, durch die während der Verformung des elastischen Körpers (12) Treibstoff in das Innere des elastischen Körpers (12) gelangt, wobei der Aufnahmeraum (22) des Dämpfungselements (10) nach dem Ende des Stoßes vollständig mit Treibstoff gefüllt ist.

2. Dämpfungselement nach Anspruch 1, bei dem eine Feder im Inneren des elastischen Körpers (12) angeordnet ist, mit welcher das nachgebende Volumen und die Federsteifigkeit des Dämpfungselements (10) einstellbar ist.

3. Dämpfungselement nach Anspruch 1 oder 2, bei dem der Aufnahmeraum (22) an einer ersten Stirnseite an die Leitung (19) mit einer vorgegebenen Querschnittsfläche (18) mündet, wobei die Querschnittsfläche (18) eine Kontaktfläche des elastischen Körpers (12) ausbildet, mit welcher der elastische Körper (12) mit dem Treibstoff nach dem Öffnen des Tankabsperrorgans in mechanischen Kontakt gelangt.

4. Dämpfungselement nach Anspruch 3, bei dem die Querschnittsfläche (18) derart bemessen ist, dass die auf die Querschnittsfläche (18) wirkende Kraft im Verhältnis zu dem Volumen im Inneren des elastischen Körpers (12) und/oder der Steifigkeit des elastischen Körpers (12) derart bemessen ist, dass der Treibstoffstoß gedämpft wird.

5. Dämpfungselement nach Anspruch 3 oder 4, bei dem die Aussparung oder Aussparungen im Bereich der Querschnittsfläche (18) angeordnet sind.

6. Dämpfungselement nach Anspruch 3 oder 4, bei dem die Aussparung oder Aussparungen im Bereich einer Lochfläche der Querschnittsfläche (18) angeordnet sind, wobei die Lochfläche (wesentlich) kleiner als die Querschnittsfläche (18) des elastischen Körpers (12) ist.

7. Dämpfungselement nach einem der vorhergehenden Ansprüche, bei dem der elastische Körper (12) die Gestalt eines Balgs, insbesondere eines Faltenbalgs, aufweist.

8. Dämpfungselement nach einem der vorhergehenden Ansprüche, bei dem der elastische Körper (12) aus einem Metall, insbesondere Titan, gebildet ist.

9. Dämpfungselement nach einem der vorhergehenden Ansprüche, bei dem das Gehäuse (11) die Gestalt eines Zylinders mit einer Höhe H aufweist, wobei in den Zylinder an einer zweiten Stirnseite ein topfförmiger Vorsprung (14) der Tiefe T ragt, der den elastischen Körper (12) umschließt.

10. Dämpfungselement nach einem der vorhergehenden Ansprüche, bei dem der elastische Körper (12) einen äußeren Durchmesser d_a und einen inneren Durchmesser d_i aufweist, wobei gilt: d_a/d_i ≈ 1,5.

11. Dämpfungselement nach einem der vorhergehenden Ansprüche, bei dem dieses derart ausgestaltet ist, dass der Stoß durch dieses auf einen Maximaldruck von 70 bar, bevorzugt von 50 bar, reduzierbar ist.

12. Raumfahrtantriebssystem, umfassend ein Triebwerk, das über ein Treibstoffzufuhr-Leitungssystem (21) mit einem Treibstofftank gekoppelt ist, wobei in dem Treibstoffzufuhr-Leitungssystem (21) ein Dämpfungselement (10) gemäß einem der vorhergehenden Ansprüche vorgesehen ist.

13. Raumfahrtantriebssystem nach Anspruch 12, bei dem das Triebwerk ein Hydrazinantrieb ist.

14. Raumfahrtantriebssystem nach Anspruch 12 oder 13, bei dem das Treibstoffzufuhr-Leitungssystem (21) ein Triebwerksventil umfasst, das nahe dem Triebwerk angeordnet ist, wobei das Dämpfungselement (10) als abschließendes Element des Treibstoffzufuhr-Leitungssystem (21) unmittelbar vor dem Triebwerksventil angeordnet ist.

## Claims

1. An attenuation element (10) for a fuel supply line system (21) of a spacecraft propulsion system, comprising:
- a housing (11) with a receiving space (22), which is couplable to a line (19) of the fuel supply line system (21), said line (19) being connectable to a fuel tank and to an engine; and
- an elastic body (12), which is arranged in the receiving space (22) and which, when a tank cutoff element of the fuel supply line system (21) is opened, is deformable in a defined manner by the surge occurring due to the influx of fuel into the fuel supply line system (21), thereby attenuating the surge;
**characterized in that**
- the elastic body (12) has one or more recess(es), through which fuel enters the interior of the elastic body (12) during the deformation of the elastic body (12), wherein the receiving space (22) of the attenuation element (10), after the end of the surge, is filled completely with fuel.

2. The attenuation element according to claim 1,
wherein a spring is arranged in the interior of the elastic body (12), by means of which the yielding volume and the spring stiffness of the attenuation element (10) is adjustable.

3. The attenuation element according to claim 1 or 2,
wherein the receiving space (22) opens onto the line (19) with a predefined cross-sectional area (18) on a first end face, wherein the cross-sectional area (18) forms a contact surface of the elastic body (12), with which the elastic body (12) comes into mechanical contact with the fuel after the tank cutoff element is opened.

4. The attenuation element according to claim 3,
wherein the cross-sectional area (18) is of dimensions such that the force acting on the cross-sectional area (18) is of a size in relation to the volume in the interior of the elastic body (12) and/or the stiffness of the elastic body (12) such that the fuel surge is attenuated.

5. The attenuation element according to claims 3 or 4,
wherein the recess or recesses are arranged in the region of the cross-sectional area (18).

6. The attenuation element according to claims 3 or 4,
wherein the recess or recesses is/are arranged in the area of a perforated surface of the cross-sectional area (18) wherein the perforated area is (substantially) smaller than the cross-sectional area (18) of the elastic body (12).

7. The attenuation element according to any one of the preceding claims,
wherein the elastic body (12) is in the form of a bellows, in particular a folding bellows.

8. The attenuation element according to any one of the preceding claims,
wherein the elastic body (12) is made of a metal, in particular titanium.

9. The attenuation element according to any one of the preceding claims,
wherein the housing (11) is in the form of a cylinder having a height H, wherein a pot-shaped protrusion (14) of the depth T enclosing the elastic body (12) protrudes into the cylinder on a second end face.

10. The attenuation element according to any one of the preceding claims,
wherein the elastic body (12) has an outside diameter d_a and an inside diameter d_i, wherein: d_a/d_i ≈ 1.5.

11. The attenuation element according to any one of the preceding claims,
wherein it is designed so that the surge is reducable thereby to a maximum pressure of 70 bar, preferably 50 bar.

12. A spacecraft propulsion system, comprising an engine, which is coupled to a fuel tank by means of a fuel supply line system (21),
wherein an attenuation element (10) according to any one of the preceding claims is provided in the fuel supply line system (21).

13. The spacecraft propulsion system according to claim 12,
wherein the engine is a hydrazine drive.

14. The spacecraft propulsion system according to claim 12 or 13,
wherein the fuel supply line system (21) comprises an engine valve, which is arranged close to the engine, wherein the attenuation element (10) is arranged directly upstream from the engine valve as a terminating element of the fuel supply line system (21).

## Revendications

1. Elément d'atténuation (10) pour un système d'alimentation en ergol (21) d'un système de propulsion spatial, comprenant :
- un boîtier (11) comportant une chambre de réception (22) pouvant être couplée à une conduite (19) du système d'alimentation en ergol (21),
laquelle peut être reliée à un réservoir d'ergol et à un réacteur, et
- un corps élastique (12) disposé dans la chambre de réception (22), lequel corps peut, à l'ouverture d'un organe obturateur du réservoir du système d'alimentation en ergol (21), se déformer de manière définie sous le choc causé par l'afflux d'ergol dans le système d'alimentation en ergol (21), afin d'atténuer ce choc,
**caractérisé en ce que**
- le corps élastique (12) présente un ou plusieurs évidements par lesquels l'ergol transite pour pénétrer à l'intérieur du corps élastique (12) pendant la déformation de ce dernier, la chambre de réception (22) de l'élément d'atténuation (10) étant complètement remplie d'ergol une fois le choc passé.

2. Elément d'atténuation selon la revendication 1, dans le cadre duquel un ressort est disposé à l'intérieur du corps élastique (12), au moyen duquel il est possible d'ajuster le volume extensible et la rigidité élastique de l'élément d'atténuation (10).

3. Elément d'atténuation selon la revendication 1 ou 2, dans le cadre duquel la chambre de réception (22) débouche à une première face frontale dans la conduite (19) avec une surface de section transversale prédéterminée, ladite surface de section transversale (18) formant une surface de contact du corps élastique (12) par le biais de laquelle le corps élastique (12) entre en contact mécanique avec l'ergol après qu'a été ouvert l'organe obturateur du réservoir.

4. Elément d'atténuation selon la revendication 3, dans le cadre duquel la surface de section transversale (18) est dimensionnée de manière que la force agissant sur la surface de section transversale (18) est telle par rapport au volume à l'intérieur du corps élastique (12) et/ou à la rigidité du corps élastique (12) que le choc produit par l'afflux d'ergol est atténué.

5. Elément d'atténuation selon la revendication 3 ou 4, dans le cadre duquel l'évidement ou les évidements sont disposés dans la zone de la surface de section transversale (18).

6. Elément d'atténuation selon la revendication 3 ou 4, dans le cadre duquel l'évidement ou les évidements sont disposés dans la zone d'une surface perforée de la surface de section transversale (18), la surface perforée étant (sensiblement) plus petite que la surface de section transversale (18) du corps élastique (12).

7. Elément d'atténuation selon l'une des revendications précédentes, dans le cadre duquel le corps élastique (12) se présente sous la forme d'un soufflet, plus particulièrement d'un soufflet à plis.

8. Elément d'atténuation selon l'une des revendications précédentes, dans le cadre duquel le corps élastique (12) est réalisé en métal, plus particulièrement en titane.

9. Elément d'atténuation selon l'une des revendications précédentes, dans le cadre duquel le boîtier (11) se présente sous la forme d'un cylindre d'une hauteur H, une saillie en forme de pot d'une profondeur T, qui entoure le corps élastique (12), faisant saillie dans le cylindre à une deuxième face frontale.

10. Elément d'atténuation selon l'une des revendications précédentes, dans le cadre duquel le corps élastique (12) présente un diamètre extérieur d_a et un diamètre intérieur d_i, étant convenu que d_a/d_i ≈ 1,5.

11. Elément d'atténuation selon l'une des revendications précédentes, dans le cadre duquel cet élément est conçu pour réduire ledit choc à une pression maximale de 70 bars, préférentiellement de 50 bars.

12. Système de propulsion spatial, comprenant un réacteur couplé à un réservoir d'ergol via un système d'alimentation en ergol (21), un élément d'atténuation (10) selon l'une des revendications précédentes étant prévu à l'intérieur du système d'alimentation en ergol (21).

13. Système de propulsion spatial selon la revendication 12, dans le cadre duquel le réacteur fonctionne avec de l'hydrazine.

14. Système de propulsion spatial selon la revendication 12 ou 13, dans le cadre duquel le système d'alimentation en ergol (21) comprend une vanne de réacteur qui est montée près du réacteur, l'élément d'atténuation (10) étant disposé en tant qu'élément de fermeture du système d'alimentation en ergol (21) directement devant la vanne de réacteur.
